# DEMANDE DE BREVET EUROPEEN

(11) **EP 1 575 215 A1**
(43) Date de publication de la demande: **14.09.2005**
(21) Numéro de dépôt: 05290079.2
(22) Date de dépôt: 12.01.2005
(51) Int. Cl.: H04L 12/24, H04L 12/56

(54) **Contrôleur de bande passante, réseau et procédé de gestion de sous-réseau IP**

(30) Priorité: 18.02.2004 FR 0450301
(71) Demandeur: ALCATEL, 75008 Paris (FR)
(72) Inventeur: Jouenne, Franck, 77330 Ozoir-la-Ferriere (FR); Couturier, Alban, 92320 Chatillon (FR)
(74) Mandataire: Chaffraix, Sylvain

(57) **Abrégé**

L'invention concerne un contrôleur de bande passante (9) adapté à :
communiquer avec un gestionnaire de réseau (10) et un élément de routage d'un sous-réseau IP (5,6,7,8) ; à générer une commande de routage d'un microflux IP en fonction d'instructions du gestionnaire ; et à envoyer cette commande vers l'élément de routage.

L'invention concerne également un réseau muni d'un tel contrôleur.

Elle concerne en outre un procédé de gestion de sous-réseau comprenant les étapes : (a) d'envoi d'instructions depuis un gestionnaire vers un contrôleur ; (b) de traitement par le contrôleur des instructions ; le cas échéant (b') de requête en routage de microflux émanant d'un terminal (2) ou d'un routeur (5) ; (c) d'envoi d'une commande de routage par le contrôleur vers un élément de routage (5,6,7,8), la commande de routage dépendant des instructions du gestionnaire ; et (d) de routage d'un microflux.

## Description

L'invention concerne un contrôleur de bande passante, un réseau et un procédé de gestion de sous-réseau IP pour le routage de données dans un réseau, et en particulier la gestion de routage de microflux IP dans un sous-réseau.

Un microflux IP est un flux IP associé à une application IP particulière et à un terminal émetteur et un terminal récepteur. Un microflux est déterminé par un groupe de 5 paramètres transportés (défini par « 5-tuple » en anglais) : la référence du protocole IP, l'adresse d'origine, l'adresse de destination, le numéro de port d'origine et le numéro de port de destination.

Actuellement, le trafic de paquets IP dans un sous-réseau peut être géré par la technologie dite MPLS (de l'anglais « multiprotocol label switching »), c'est-à-dire une technologie de transmission qui permet d'attribuer une étiquette à un flux IP, fournissant des informations sur le chemin qu'il doit parcourir, de telle sorte qu'il puisse être commuté ou routé plus rapidement sur des réseaux utilisant différents types de protocoles. Or, cette technologie présente une granularité élevée. Des routeurs réalisent un filtrage en fonction de règles prédéfinies lors de la mise en service du sous-réseau. La gestion de trafic est usuellement réalisée par filtrage en fonction de plages d'adresses d'origine des paquets IP du flux. Ainsi, si un site d'origine envoie un flux de paquets IP considérés comme importants (par exemple des paquets dont le numéro de port concerne un protocole particulier qu'il a été décidé de privilégier), l'ensemble du flux de paquets va emprunter un même chemin. Ceci nécessite une allocation de ressource (« taille des tuyaux ») adaptée aux estimations de trafic et à la qualité du transport exigée. Ainsi, cette technologie est potentiellement génératrice de surcharges sur certains chemins, sous-dimensionnés à un instant donné, ou de gaspillage si le dimensionnement de ces chemins est trop important pendant les plages horaires dites « creuses ». L'utilisation de microflux IP, présentant des contenus tels que la voix ou la vidéo impliquant des contraintes techniques en termes de pertes de paquets, de délais de transmission ou de bande passante, peut être altérée par des ralentissements de trafic consécutifs aux surcharges. Ainsi, les procédés de gestion de routage et d'ingénierie de trafic actuels ne permettent pas d'assurer un routage suffisamment flexible. En outre, ces procédés ne permettent pas d'assurer une qualité de service en fonction de l'état courant du réseau. Cette technologie ne permet en outre pas de conserver la qualité d'un service associé à un microflux lors de la fermeture d'un chemin et du transfert du flux global empruntant initialement ce chemin vers un autre chemin. Des interventions de maintenance sur le réseau ou une défaillance d'éléments du chemin peuvent ainsi conduire à un transfert/fermeture de chemin occasionnant des défaillances de qualité de service.

Il existe par ailleurs des contrôleurs de bande-passante, tels que décrit par la demande de brevet français portant le numéro de publication 2 835 987. Un tel dispositif permet de se placer à un bon niveau de granularité, en prenant en compte des microflux. Toutefois, il ne permet pas de prendre en compte les informations générales, c'est-à-dire concernant le réseau ou un sous-réseau, qui dépendent de plusieurs facteurs comme les contrats entre fournisseurs de services, le déploiement d'applications d'optimisation etc.

Il existe donc un besoin pour un procédé et un dispositif de gestion de microflux qui résolve un ou plusieurs de ces inconvénients.

L'invention a pour premier objet un contrôleur de bande passante adapté à communiquer avec au moins un élément de routage d'un sous-réseau de communication IP, caractérisé en ce qu'il est de surcroît adapté à communiquer avec un gestionnaire de réseau et à :
- générer au moins une commande de routage d'un microflux IP en fonction d'instructions de routage reçues du gestionnaire de réseau ; et à
- envoyer l'au moins une commande de routage vers l'au moins un élément de routage.

Selon un mode de réalisation, le contrôleur de bande passante comprend en outre :
- un interpréteur d'instructions de gestionnaire de réseau ; et
- un module de génération de commandes de routage,
afin de traduire l'instruction de routage reçues du gestionnaire de réseau en commandes de routage à émettre vers l'au moins un élément de routage.

L'invention a également pour objet un réseau de communication comprenant :
- un sous-réseau de communication au protocole IP, muni de plusieurs éléments de routage ;
- un gestionnaire de réseau; et
- un contrôleur de bande passante tel que précédemment défini, adapté à communiquer avec au moins un élément de routage du sous-réseau et avec le gestionnaire de réseau.

Selon un mode de réalisation, le gestionnaire de réseau dispose de mesures d'état du sous-réseau ; et les instructions du gestionnaire de réseau dépendent de ces mesures.

Selon un mode de réalisation, un élément de routage est un routeur frontière du sous-réseau.

Selon un mode de réalisation, au moins un élément de routage est un traducteur d'adresses réseau.

Selon un mode de réalisation, le contrôleur de bande passante et le gestionnaire de réseau sont dans un même élément de réseau.

L'invention a pour troisième objet un procédé de gestion d'un sous-réseau de communication, comprenant les étapes :
(a) d'envoi d'instructions de routage depuis un gestionnaire de réseau vers un contrôleur de bande passante;
(b) de traitement par le contrôleur de bande passante des instructions de routage ;
(c) d'envoi d'au moins une commande de routage de microflux IP par le contrôleur de bande passante vers au moins un élément de routage du sous-réseau de communication, l'au moins une commande de routage dépendant des instructions de routage ; et,
(d) de routage d'un microflux IP dans le sous-réseau de communication en fonction de l'au moins une commande de routage envoyée à l'étape (c).

Selon des modes de réalisation,
- Le procédé comprend en outre une étape (b') de requête en routage de microflux émanant d'un terminal, d'un serveur, d'un autre contrôleur de bande passante communiquant avec le sous-réseau ou, indirectement, d'un routeur.
- L'étape (b) de traitement comprend une étape d'interprétation par le contrôleur des instructions de routage envoyées à l'étape (a).
- les instructions de routage envoyées à l'étape (a) comprennent une requête en suspension de trafic de microflux IP sur un chemin de routage initial ; et
- l'étape (d) comprend une étape de suspension de trafic de microflux IP sur le chemin initial.
- l'étape (d) comprend en outre un transfert de trafic de microflux IP sur un chemin autre que le chemin initial.
- la requête en suspension de trafic est envoyée, à l'étape (a), suite à la détection par le gestionnaire de réseau d'une requête en intervention de maintenance sur le chemin initial.
- Le procédé comprend en outre les étapes :
   (e) d'envoi par l'élément de routage d'une confirmation de suspension de trafic de microflux IP sur le chemin initial au contrôleur de bande passante ; et
   (f) d'envoi par le contrôleur de bande passante de confirmation de suspension de trafic au gestionnaire de réseau.
- le procédé comprend une étape préalable de mesure d'état d'un chemin du sous-réseau ; et les instructions envoyées à l'étape (a) dépendent de la mesure d'état du chemin du sous-réseau.
- l'étape préalable de mesure d'état du chemin comprend une mesure de charge dudit chemin.
- les instructions envoyées à l'étape (a) dépendent de règles de routage d'une qualité de service.
- les instructions envoyées à l'étape (a) dépendent d'un type de contenu de microflux.

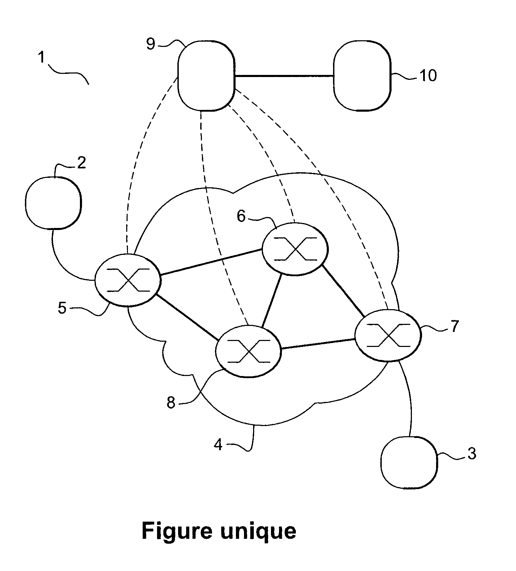

L'invention est maintenant décrite plus en détails dans la description qui suit, et en référence à la figure unique, qui représente un exemple de réseau de communication mettant en oeuvre l'invention.

L'invention propose un procédé et un module de bande passante, adaptés à commander des éléments de routage d'un sous-réseau de communication IP, de façon à fixer le routage de microflux IP en fonction de règles définies par un gestionnaire réseau.

La figure représente un réseau de communication 1. Ce réseau de communication comprend un terminal émetteur 2 mis en communication avec un terminal récepteur 3 par l'intermédiaire d'un sous-réseau IP 4. Le sous-réseau comprend plusieurs éléments de routage 5 à 8 définissant plusieurs trajets de routage entre eux. Les éléments de routage 5 et 7 de l'exemple sont des routeurs frontière du sous-réseau et les éléments de routage 6 et 8 sont des routeurs de corps de ce sous-réseau 4 (ou « core router » selon la terminologie en langue anglaise). Les éléments de routage 5 à 8 sont commandés par un contrôleur de bande-passante 9. Le contrôleur de bande passante 9 est en communication avec un gestionnaire de réseau 10, aussi appelé NMS (de l'anglais « Network Management System »).

Dans des variantes de l'invention, l'élément référencé par le chiffre 2 peut être un serveur ou un autre contrôleur de bande-passante (par exemple associé à un autre sous-réseau, situé « en amont » du sous-réseau IP 4).

Le gestionnaire de réseau 10 définit des objectifs de routage et peut éventuellement réunir des données contextuelles concernant le sous-réseau. Le gestionnaire de réseau 10 a une connaissance détaillée du réseau. Le réseau peut, par exemple, avoir été configuré par le gestionnaire de réseau 10. Le rôle du gestionnaire de réseau 10 est de fournir des instructions de routage au contrôleur de bande passante, en particulier pour la situation où le contrôleur doit rediriger des flux.

Par exemple et pour des flux devant aller de A vers B, ces instructions de routage peuvent viser à faire passer 60% de ces flux par le chemin A-C-B et 40% par le chemin A-D-B. Elles peuvent en outre viser l'utilisation d'un chemin particulier jusqu'à un pourcentage seuil d'utilisation de chemin, au-delà duquel des flux sont ventilés sur d'autres chemins.

Le gestionnaire de réseau 10 fournit ainsi des instructions de routage des microflux en fonction de règles de routage générales dont il dispose.

Ces règles sont par exemple imposées par des contrats de qualité de service, passés entre un fournisseur de service disposant du sous-réseau et un client souhaitant établir un trafic entre les terminaux 2 et 3. On parle dans ce cas de règles de routage de qualité de service.

Ces règles peuvent également être déterminées empiriquement en fonction de constatations du fournisseur de service concernant le trafic dans le sous-réseau. Ces règles peuvent également être déterminées de façon à réduire les coûts de trafic en fonction de périodes de tarification associées à certaines routes.

Ces règles peuvent encore être destinées à effectuer un partage de charge pour un microflux dans le sous-réseau. On peut en particulier requérir une répartition de trafic de la vidéo sur IP sur plusieurs routes afin d'éviter l'engorgement d'une route particulière dans le sous-réseau.

En fonction des ces règles, des instructions sont fournies au contrôleur de bande passante 9, en utilisant par exemple un protocole de transport conforme à l'architecture CORBA (« Common Object Request Broker Architecture ») définie par l'OMG (Open Management Group), et/ou un protocole de type SOAP (« Simple Object Access Protocol »).

Le contrôleur de bande passante 9 traite les instructions de routage fournies par le gestionnaire de réseau 10. La fonction de traitement comprend notamment l'enregistrement des instructions de routage reçues par le contrôleur de bande-passante.

En outre, les instructions de routage du gestionnaire de réseau ne sont de préférence pas spécifiquement adaptées au sous-réseau 4. Elles peuvent être de portée plus large. Ces instructions peuvent alors être traduites en commandes spécifiques au sous-réseau par le contrôleur de bande passante 9, qui peut, à cette fin, disposer d'un interpréteur d'instructions.

Le contrôleur de bande passante 9 génère des commandes de routage de microflux en fonction de ces instructions de routage. Le contrôleur de bande passante 9 peut alors envoyer des commandes de routage des microflux à un ou plusieurs éléments du sous-réseau. Le contrôleur de bande passante peut générer des commandes de routage spécifiques au sous-réseau en fonction de différentes données mises à sa disposition par exemple dans une base de données. On peut également envisager que ces données soient transmises au contrôleur de bande passante 9 par le gestionnaire de réseau 10. Le contrôleur de bande passante 9 peut notamment disposer de la topologie du sous-réseau ou de tables de routage dans ce sous-réseau 4. Le contrôleur de bande passante 9 peut également disposer de données concernant le contexte du sous-réseau, telles que la charge sur différents chemins du sous-réseau, le taux de perte de paquets (et plus généralement la qualité de service) sur différents chemins du sous-réseau ou encore le coût instantané d'une liaison dans le sous-réseau.

Le contrôleur de bande passante peut, selon le type d'instructions, générer et envoyer des commandes de routage de microflux à un élément du sous-réseau directement suite à l'envoi d'instructions spécifiques du gestionnaire de réseau, comme il sera discuté plus loin.

Cependant, dans une variante, le gestionnaire de réseau 10 envoie des instructions au contrôleur de bande passante 9 mais ce dernier 9 ne va générer et envoyer des commandes de routage de microflux à un élément du sous-réseau 5, 6, 7, 8 qu'à la suite d'une requête en routage de microflux émanant par exemple d'un terminal 2, d'un serveur 2 ou d'un autre contrôleur 2 de bande-passante.

Un cas de figure typique est le suivant : un gestionnaire de réseau 10 a fourni des instructions, basées sur un ensemble de règles, à un contrôleur de bande-passante 10. Un terminal 2 ou un serveur 2 sollicite une qualité de service pour un type ou un ensemble de microflux à transporter (ou router) vers un terminal client 3. Cette requête est répercutée vers le contrôleur de bande-passante 9 qui va alors générer et envoyer des commandes de routage de microflux à un élément du sous-réseau 5, 6, 7, 8, afin d'assurer la qualité de service demandée et ce, tout en tenant compte des instructions envoyées par le gestionnaire de réseau 10.

La commande générée par le contrôleur de bande passante 9 est reçue par un élément de réseau (ou « network element » selon la terminologie en langue anglaise) et traduite, c'est-à-dire exécutée par cet élément de réseau.

Cet élément de réseau peut par exemple être un routeur ou un traducteur d'adresses de réseau (ou « NAT box », de l'anglais « Network Address Translation »). Dans ce qui suit, on considérera cependant qu'il s'agit d'un routeur, à des fins d'illustration. Il est à noter que certains routeurs peuvent avoir des fonctionnalités des traducteurs d'adresses de réseau (NAT).

Le routage des microflux IP est ainsi effectué de façon spécifique au sous-réseau en fonction des règles générales définies dans le gestionnaire de réseau 10. La séparation entre la fonction de définition des règles générales de routage du gestionnaire de réseau 10, et la fonction d'application de ces règles de routage par le contrôleur de bande passante 9 est préférable. Cette séparation permet au contrôleur de bande passante 9 de se décharger de la détermination de règles de routage et donc d'améliorer la commande des éléments de routage.

En supposant que le gestionnaire de réseau 10 de la figure fournit au contrôleur de bande passante 9 des instructions de partage de charge des microflux de type voix sur IP dans le sous-réseau 4, le contrôleur de bande passante va (par exemple suite à une requête en routage émanant d'un terminal 2, d'un serveur 2 ou d'un autre contrôleur 2) générer et envoyer une commande adéquate à l'élément de routage 5. Cette commande peut ainsi exiger que l'élément de routage 5 route une moitié des microflux de type voix sur IP provenant du terminal 2 suivant le chemin 5-6-7 et l'autre moitié des microflux de type voix sur IP suivant le chemin 5-8-7 -les chiffres identifiant les chemins correspondent aux références des éléments de routage empruntés successivement par les microflux-.

On peut également supposer que le gestionnaire de réseau 10 envoie une requête du type « emprunter le chemin le moins coûteux pour les microflux de type voie sur IP ». Suite à une requête en routage émanant d'un terminal 2, d'un serveur 2 ou d'un autre contrôleur 2, le contrôleur de bande-passante 9 peut par exemple déterminer que le chemin 5-6-7 est le moins coûteux et ce, en fonction de données de coût dont le contrôleur 9 dispose ou qui ont été fournies par le gestionnaire de réseau 10. Le contrôleur de bande passante 9 génère et émet alors, vers le routeur 5, une commande de routage des microflux de type voix sur IP exclusivement sur le chemin 5-6-7 entre les routeurs 5 et 7. Le changement de routage s'effectue alors de façon transparente pour l'utilisateur.

Le contrôleur de bande passante 9 peut également avoir pour rôle de définir des commandes de routage pour de nouveaux microflux transitant par le sous-réseau 4. On peut ainsi envisager que lors de la réception d'un nouveau microflux sur le routeur 5, le routeur 5 communique certaines caractéristiques du microflux, telles que le protocole du microflux, l'adresse IP de destination du microflux ou toute autre caractéristique utile au routage. Dans le cadre du présent brevet, la notion de « requête en routage de microflux » peut comprendre la communication par le routeur 5 des caractéristiques ci-dessus au contrôleur 9.

En outre, une requête en routage de microflux émanant d'un terminal 2, d'un serveur 2 ou d'un autre contrôleur 2 peut elle-même émaner indirectement de (c'est-à-dire transiter par) un routeur 5 qui la communique au contrôleur 9.

Le contrôleur de bande passante 9 détermine alors le ou les chemins de routage du microflux et génère une commande de routage correspondante. Le routeur reçoit et exécute cette commande. Le nouveau microflux peut alors emprunter un chemin correspondant aux règles générales du gestionnaire de réseau 10 et/ou, le cas échéant, à une requête émanant d'un terminal 2, d'un serveur 2 ou un autre contrôleur 2. La modification du routage d'un nouveau microflux est ainsi effectuée de façon transparente pour l'utilisateur. Le routage est ainsi réalisé selon l'invention au niveau du microflux et non au niveau de l'agrégat, en fonction de paramètres de ce microflux. La gestion du routage peut ainsi être effectuée à une faible granularité. La flexibilité de la gestion de routage est améliorée, ce qui permet notamment d'éviter les engorgements dans le sous-réseau. Des qualités de service différentes peuvent en outre être apportées pour chaque microflux.

Comme mentionné ci-avant, on peut en outre prévoir de modifier le routage d'un microflux IP dans le sous-réseau par tout moyen adéquat. On peut par exemple envisager d'utiliser des traducteurs d'adresses réseau à cette fin.

Selon une variante, les fonctionnalités du contrôleur de bande passante 9 et du gestionnaire de réseau 10 peuvent être réunies au sein d'un même élément, tel qu'un serveur de règles, ou PDP (de l'anglais « Policy Decision Point »). Les fonctionnalités du contrôleur de bande passante 9 et du gestionnaire de réseau 10 peuvent par exemple être mises en oeuvre sous forme logicielle dans un terminal communicant avec les éléments réseau 5 à 7.

Bien que le contrôleur de bande passante de la figure soit représenté comme communiquant avec les éléments de routage 5 à 8, on peut bien entendu prévoir que les commandes de routage de microflux ne soient envoyées qu'à un nombre adéquat d'éléments de routage. On peut ainsi envisager dans l'exemple de la figure de n'envoyer les commandes de routage qu'au routeur frontière 5 du sous-réseau 4.

Une variante de procédé de gestion, vise à rendre la fermeture d'un chemin de routage d'un microflux IP dans le sous-réseau, transparente ou prévisible pour un utilisateur du microflux. Selon cette variante, le gestionnaire de réseau 10 transmet des instructions au contrôleur de bande passante 9. Ces instructions peuvent par exemple contenir une requête en suspension d'une route ou, plus généralement, en changement de propriétés de qualité de service d'une route. De la sorte, une route peut, suite à la requête, ne plus être qualifiée pour le trafic de microflux d'un type donné, par exemple de type voix. On peut par exemple envisager d'effectuer une intervention de maintenance sur la liaison physique entre les éléments de routage 6 et 7. On peut également éviter une liaison en fonction d'une recherche de trajets à moindre coût à certains horaires. A supposer que cette liaison assure le transfert de microflux du type voix sur IP, les instructions vont par exemple contenir une requête en interdiction de tout nouveau microflux de type « Voix sur IP » sur cette liaison. On considère par exemple qu'une nouvelle conversation téléphonique transitant par le sous-réseau est un nouveau microflux de type voix sur IP. De façon générale, on peut envisager des requêtes en interdiction d'un nouveau microflux d'un type donné sur la liaison, en interdiction totale de microflux d'un type donné sur la liaison, en dédoublage sur une autre route d'un type de microflux à interdire sur la liaison ou, encore, toute requête visant un changement de qualité de service.

Le contrôleur de bande passante 9 peut informer le gestionnaire de réseau 10 du type d'interdiction actuellement mis en oeuvre sur la liaison. Le contrôleur de bande passante 9 peut notamment informer le gestionnaire de réseau 10 que la liaison est libérée. Le gestionnaire de réseau 10 peut alors par exemple indiquer à un opérateur qu'une intervention de maintenance est réalisable sur cette liaison. Le contrôleur de bande passante 9 peut également informer le gestionnaire de réseau 10 d'une durée prévue avant que l'interdiction de la liaison ne soit effective. On peut encore prévoir que le contrôleur de bande passante 9 reçoive une instruction de fin d'interruption de liaison en provenance du gestionnaire de réseau 10. On peut en outre prévoir que le contrôleur de bande passante 9 envoie alors des commandes de rétablissement du microflux sur la liaison libérée aux éléments de routage appropriés. Le microflux peut alors être à nouveau routé comme initialement par l'intermédiaire de la liaison rétablie. On peut ainsi effectuer des opérations de maintenance sur une liaison de façon transparente pour un utilisateur ou une application utilisant initialement cette liaison.

Lorsque le contrôleur de bande passante 9 détermine que le microflux empruntant une liaison à interrompre ne peut pas être re-routé, on peut prévoir que le contrôleur de bande passante 9 émette, vers le gestionnaire de réseau 10 ou directement vers les terminaux 2 ou 3 une indication que ce microflux va être interrompu sans re-routage.

En variante, on peut prévoir que le contrôleur de bande passante 9 envoie, vers le gestionnaire de réseau 10 ou directement vers les terminaux 2 ou 3, un message de retour général, comprenant par exemple des statistiques relatives aux microflux concernés, telles que leur nombre et leur pourcentage.

En outre, le contrôleur de bande passante 9 peut émettre une indication de délai avant la suspension (c'est-à-dire ici l'interruption) du routage du microflux. Le contrôleur de bande passante 9 peut également émettre l'indication qu'un nouveau flux ne pourra pas être routé à l'intérieur du sous-réseau 4, par exemple à l'issue de ce délai. Lorsqu'un terminal 2,3 a lui-même sollicité une qualité de service, le contrôleur peut en outre émettre de telles indications vers ce terminal 2,3.

La suspension de trafic de microflux peut donc s'opérer, de préférence, avec un délai.

Le routage du microflux, qui empruntait initialement la liaison interdite, est réalisé par toute façon appropriée. Le gestionnaire de réseau 10 peut ainsi fournir des instructions de répartition du microflux sur plusieurs autres chemins afin de répartir la charge sur le sous-réseau. Le contrôleur de bande passante 9 peut également modifier le routage d'autres microflux en fonction du microflux déplacé de la liaison interdite.

Les présents modes de réalisation et exemples doivent être considérés comme ayant été présentés à titre illustratif et non restrictif et l'invention n'est pas censée être limitée aux détails fournis ici mais peut être modifiée en restant dans le cadre de la portée des revendications annexées. Ainsi, bien qu'on ait décrit dans l'exemple un terminal récepteur et un terminal émetteur, l'invention s'applique bien entendu dans les deux sens de transfert de microflux ou pour des terminaux 2, 3 qui ne sont que des éléments intermédiaires du transfert des microflux.

## Revendications

1. Contrôleur de bande passante (9) adapté à communiquer avec au moins un élément de routage (5,6,7,8) d'un sous-réseau de communication IP, **caractérisé en ce qu'**il est de surcroît adapté à communiquer avec un gestionnaire de réseau (10) et à :
- générer au moins une commande de routage d'un microflux IP en fonction d'instructions de routage reçues dudit gestionnaire de réseau ; et à
- envoyer ladite au moins une commande de routage vers ledit au moins un élément de routage (5,6,7,8).

2. Le contrôleur de bande passante (9) de la revendication 1, comprenant :
- un interpréteur d'instructions de gestionnaire de réseau ; et
- un module de génération de commandes de routage,
afin de traduire lesdites instruction de routage reçues dudit gestionnaire de réseau en commandes de routage à émettre vers ledit au moins un élément de routage.

3. Réseau (1) de communication comprenant :
- un sous-réseau de communication au protocole IP, muni de plusieurs éléments de routage (5,6,7,8) ;
- un gestionnaire de réseau (10) ; et
- un contrôleur de bande passante (9) selon la revendication 1 ou 2 ;
dans lequel le contrôleur est adapté à communiquer avec au moins un élément de routage (5,6,7,8) du sous-réseau et avec le gestionnaire de réseau (10).

4. Le réseau (1) de la revendication 3, **caractérisé en ce que** :
- le gestionnaire de réseau (10) dispose de mesures d'état du sous-réseau ; et
- les instructions de gestionnaire de réseau dépendent de ces mesures.

5. Le réseau (1) de la revendication 3 ou 4, **caractérisé en ce qu'**au moins un élément de routage (5,7) est un routeur frontière du sous-réseau.

6. Le réseau de la revendication 3 ou 4, **caractérisé en ce qu'**au moins un élément de routage (5,6,7,8) est un traducteur d'adresses réseau.

7. Le réseau (1) de l'une quelconque des revendications 3 à 6, **caractérisé en ce que** le contrôleur de bande passante (9) et le gestionnaire de réseau (10) sont dans un même élément de réseau.

8. Procédé de gestion d'un sous-réseau de communication, comprenant les étapes :
(a) d'envoi d'instructions de routage depuis un gestionnaire de réseau (10) vers un contrôleur de bande passante (9) ;
(b) de traitement par le contrôleur de bande passante (9) desdites instructions de routage ;
(c) d'envoi d'au moins une commande de routage de microflux IP par le contrôleur de bande passante (9) vers au moins un élément de routage (5, 6, 7, 8) dudit sous-réseau de communication, ladite au moins une commande de routage dépendant desdites instructions de routage ; et,
(d) de routage d'un microflux IP dans ledit sous-réseau de communication en fonction de ladite au moins une commande de routage envoyée à l'étape (c).

9. Le procédé de la revendication 8, comprenant en outre une étape :
- (b') de requête en routage de microflux émanant d'un terminal (2), d'un serveur (2), d'un autre contrôleur de bande passante (2) communiquant avec ledit sous-réseau ou, indirectement, d'un routeur (5).

10. Le procédé de la revendication 8 ou 9, **caractérisé en ce que** l'étape (b) de traitement comprend une étape d'interprétation par le contrôleur (9) des instructions de routage envoyées à l'étape (a).

11. Le procédé de la revendication 8, 9 ou 10, **caractérisé en ce que** :
- les instructions de routage envoyées à l'étape (a) comprennent une requête en suspension de trafic de microflux IP sur un chemin de routage initial ; et
- l'étape (d) comprend une étape de suspension de trafic de microflux IP sur le chemin initial.

12. Le procédé de la revendication 11, **caractérisé en ce que** l'étape (d) comprend en outre un transfert de trafic de microflux IP sur un chemin autre que le chemin initial.

13. Le procédé de la revendication 11 ou 12, **caractérisé en ce que** la requête en suspension de trafic est envoyée, à l'étape (a), suite à la détection par le gestionnaire de réseau (10) d'une requête en intervention de maintenance sur le chemin initial.

14. Le procédé de l'une quelconque des revendications 8 à 13, comprenant en outre les étapes :
(e) d'envoi par l'élément de routage (5, 6, 7, 8) d'une confirmation de suspension de trafic de microflux IP sur le chemin initial au contrôleur de bande passante (9) ; et
(f) d'envoi par le contrôleur de bande passante (9) de confirmation de suspension de trafic au gestionnaire de réseau (10).

15. Le procédé de l'une quelconque des revendications 8 à 14, **caractérisé en ce que** :
- le procédé comprend une étape préalable de mesure d'état d'un chemin du sous-réseau ; et
- les instructions envoyées à l'étape (a) dépendent de la mesure d'état du chemin du sous-réseau.

16. Le procédé de la revendication 15, **caractérisé en ce que** l'étape préalable de mesure d'état du chemin comprend une mesure de charge dudit chemin.

17. Le procédé de l'une quelconque des revendications 8 à 16, **caractérisé en ce que** les instructions envoyées à l'étape (a) dépendent de règles de routage d'une qualité de service.

18. Le procédé de l'une des revendications 8 à 17, **caractérisé en ce que** les instructions envoyées à l'étape (a) dépendent d'un type de contenu de microflux.
